# EUROPEAN PATENT SPECIFICATION

(11) **EP 0 437 498 B1**
(45) Date of publication and mention of the grant of the patent: **20.04.1994**
(21) Application number: 89911511.7
(22) Date of filing: 04.10.1989
(51) Int. Cl.: G03B 17/24

(54) **CAMERA APPARATUS FOR MAGNETICALLY RECORDING ON FILM**
KAMERA MIT MAGNETISCHER AUFZEICHNUNG AUF DEN FILM
APPAREIL PHOTOGRAPHIQUE POUR ENREGISTREMENT MAGNETIQUE SUR UN FILM

(30) Priority: 07.10.1988 US 254906
(43) Date of publication of application: 24.07.1991
(73) Proprietor: EASTMAN KODAK COMPANY, Rochester, New York 14650-2201 (US)
(72) Inventor: WASH, Michael, Lee, Pittsford, NY 14534 (US); DIEHL, Conrad, Rochester, NY 14622 (US)
(74) Representative: Blickle, K. Werner, Dipl.-Ing.
(86) International application number: US8904339
(87) International publication number: WO9004201

(56) References cited:
- EP-A- 0 009 673
- EP-A- 0 125 655
- DE-A- 3 203 717
- US-A- 2 585 913
- US-A- 4 641 936

## Description

Reference is made to the following related publications:
1. International Publication No. WO 90/04202, entitled CAMERA APPARATUS FOR MAGNETICALLY RECORDING ON FILM, published April 19, 1990, in the name of Richard R. Kelbe.
2. U.S. Patent No. 4,996,546, entitled CAMERA APPARATUS FOR MAGNETICALLY RECORDING ON FILM, granted February 2, 1991, in the names of Daniel M. Pagano and Robert P. Cloutier.
3. U.S. Patent No. 4,933,780, entitled CAMERA APPARATUS FOR MAGNETICALLY RECORDING ON FILM, granted June 12, 1990, in the names of Michael L. Wash and Christopher T. Mattson.
4. International Publication No. WO 90/04214, entitled FILM INFORMATION EXCHANGE SYSTEM USING DEDICATED MAGNETIC TRACKS ON FILM, published April 19, 1990, in the name of Robert P. Cloutier et al.
5. U.S. Patent No. 4,855,773, entitled MOTOR-DRIVEN FILM TRANSPORT APPARATUS, granted August 8, 1989, in the name of Donald M. Harvey.
6. International Publication No. WO 89/12894, entitled THREE PART DECODER CIRCUIT, published December 28, 1989, in the name of Michael L. Wash
7. U.S. Patent No. 4,912,467, entitled THREE PART ENCODER CIRCUIT, granted March 27, 1990, in the names of Arthur Whitfield and Michael L. Wash.
8. U.S. Patent No. 4,876,697, entitled THREE PART DECODER CIRCUIT, granted October 24, 1989, in the name of Arthur Whitfield.
9. International Publication No. WO-A-89/12892, entitled METHOD FOR MODULATING A BINARY DATA STREAM, published December 28, 1989, in the name of Michael L. Wash.
10. U.S. Patent No. 4,878,075, entitled CAMERA APPARATUS FOR PREVENTING DOUBLE EXPOSURE, granted October 31, 1989, in the name of James W. Cannon.

### TECHNICAL FIELD

This invention relates to magnetic recording apparatus for cameras and more particularly, to magnetic recording apparatus for photographic still cameras.

### BACKGROUND ART

In International Publication WO-A-90/04214, cross referenced above, there is disclosed a photographic film having a virtually transparent magnetic coating covering the non-emulsion side of the film and dedicated recording areas on the coating for recording information such as film type, film speed, film exposure information and information relevant to the processing and subsequent use (e.g. printing) of the film. The system thus provides for recording of information during film manufacture, reading and/or recording of information during camera use, and reading and/or recording of printing related information during photofinishing. In the aforementioned copending application it is specifically proposed that camera information be recorded in spaced tracks preferably outside the image area along the edge of the film.

Reading and writing information on a magnetic coating or stripe on photographic film in a still camera requires solutions to problems different than those encountered in other apparatus. Perhaps the most significant problem is the space limitations in a portable hand held still camera which necessarily must be as compact and light as possible to appeal to the average consumer. Perhaps equally significant, however, is the characteristics of photographic film relative to more common recording mediums such as magnetic tape. Because photographic films are stiffer then magnetic tape and have varying degrees of curl both in the longitudinal and tranverse directions depending upon the base materials and number and nature of sensitizing layers and environmental conditions, they present unusual problems in reading and writing information on a magnetic coating or stripe. To provide a reliable read or write signal the magnetic head must remain in close proximity to the magnetic coating. Any disturbances such as variations in film curl can vary the relationship of the head to the coating and decrease the reliability of the signal.

Another problem unique to compact photographic still cameras is that film advance occurs in a short period of time with a limited amount of motion and does not allow the steady state conditions normally associated with magnetic recording. Recording and playback must take place during transient conditions which tend to separate the film from the recording head. For optimum magnetic recording during these conditions, the magnetic head must maintain contact, i.e. within .254 µm (10 micro-inches) with the magnetic coating.

Techniques for maintaining the desired relationship of the head to a magnetic coating in other apparatus, are not practical for use in a photographic still camera particularly a compact 35mm camera. For example, in a sound movie camera, a film having a magnetic stripe along one edge is typically moved over a drum and information is recorded by a magnetic head positioned in close proximity to the drum. The drum provides a rigid support for the film, removes film curl and assures a uniform head to film relationship. While such a fixed support such as a sound drum produces satisfactory results, the space limitations in a photographic still camera render it impractical. Also, it is not suitable for the transient conditions described above.

Also, in a still camera system, it is desirable to record information pertinent to and coincident with images because negatives are cut up in photofinishing. In sound movie cameras, recorded information is displaced from the image to achieve continuous motion of the film during recording as compared with intermittent motion during exposure.

The prior art relating to recording on photographic films thus generally teaches providing a support for the recording medium on the side opposite from the recording head to ensure reliable recording.

In US-A-4,933,780, cross referenced above, a support on the other side of the film is provided by providing a recess in the cartridge film exit lip and positioning a magnetic head to engage a magnetic coating or stripe on the film within the recess so that the felt light-locking material and the lower side of the lip cooperate to provide a compliant support on the side of the film opposite to the recording head. While this structure provides a support of the type considered necessary in the prior art and is suitable for compact cameras it requires a special film cartridge.

U.S. Patent No. 4,641,936 issued in the names of Harvey et al on February 10, 1987 discloses that in a bottom loading camera, a loading chamber receives a film cartridge in an axial direction substantially at the same time a film leader projecting from the cartridge is transversely received in a feed path between the loading chamber and a take-up chamber. By mounting a back door for pivoting proximate an end of the camera body closest to the loading chamber, a cartridge positioning member on the door can axially depress the cartridge in the chamber to properly position the cartridge as the door is initially closed. Then, with continued closure of the back door, cooperating means on the door and adjacent the feed path can transversely position the film leader to straighten it along the path in the event the leader is skewed. Next, a film guide on the door can urge the forward end of the film leader against the take-up spool in the take-up chamber to enable the spool to engage the leader end. Thus, the leader end will have benefited from any previous correction to the film cartridge or the film leader.

European Patent publication EP-A-0 125 655 discloses a device, comprising a support member carrying a magnetic head which contacts a magnetic recording medium such as a magnetic card moving in one direction relative thereto and at least a pair of support holes provided downstream and upstream to the magnetic head on an imaginary line passing through the magnetic head in parallel to the direction of the motion of the magnetic recording medium in the mounting member having at least a pair of legs inserted through the corresponding support holes and a spring portion for biasing the legs downwards. Each of the legs is provided with a step for restricting the upward motion of the supporting member. By forming the mounting member out of a single plate, the device may have the flexibility required for achieving an intimate contact between the magnetic head and the magentic medium and the rigidity required for accurately positioning the magnetic head.

EP-A-0 009 673 discloses an instant picture camera having a cassette in the pull-out section. The cassette contains single sheet instant film stacks which are fed through a slit in the cassette between two developer rollers. The camera comprises a sweeping magnetic head that sweeps touching and along a magnetic magnetic layer of the film for recording or replaying sound. The magnetic head has a coupling device by which it can be coupled to one or another transport mechanism for sweeping in alternate directions.

DE-A-3203717 discloses a photographic disc camera which comprises a gravity controlled switch providing a digital signal relating to the attitude of the camera. This signal is recorded on the film, or on a magnetic strip of the film during exposure of a frame of the film, so that subsequent processing can turn the frame the correct way up.

### DISCLOSURE OF THE INVENTION

It is an object of the present invention to provide a magnetic recording means for reading and recording information on a photographic film in a photographic still camera without the use of a support for the film opposite from the recording head.

In accordance with the invention, a photographic still camera is defined by claims 1 or 7. The magnetic recording on a photographic film in a still camera is achieved in a simple reliable manner by taking advantage of the residual stiffness imprinted to the film by the camera and/or cartridge parts. In the disclosed embodiment advantage is taken of the residual stiffness of the film as it exits the lip opening of a film cartridge and the stiffness imparted to the film by the pressure plate. By positioning a magnetic head in close proximity to the lip opening and providing for limited movement of the head in directions to compensate for disturbances such as variations in film curl, the lateral lengthwise stiffness imparted to the film enables the head to read or write with reliability without the use of a support on the other side of the film. Thus the film itself provides the support or back-up means commonly used in equipment such as movie cameras and in the apparatus disclosed in US-A-4,933,780 discussed above.

### BRIEF DESCRIPTION OF THE DRAWINGS

Other advantages of the invention will become apparent from the following description taken in connection with the accompanying drawings wherein:
FIG. 1 is a cross section of a portion of a conventional photographic still camera illustrating a magnetic recording apparatus in accordance with the invention;
FIG. 2 is a perspective view of the back or door for the camera illustrated in FIG. 1.;
FIG. 3 is a cross section taken perpendicular to the section shown in FIG. 1;
FIG. 4 is an enlarged cross section of a conventional 35mm film cartridge;
FIG. 5 is an enlarged top view of the flexure and head assembly shown in FIGS. 1 and 2;
FIG. 6 is an end view of the assembly shown in FIG. 5; and
FIG. 7 is a side view of the assembly shown in FIG. 6.

### BEST MODE FOR CARRYING OUT THE INVENTION

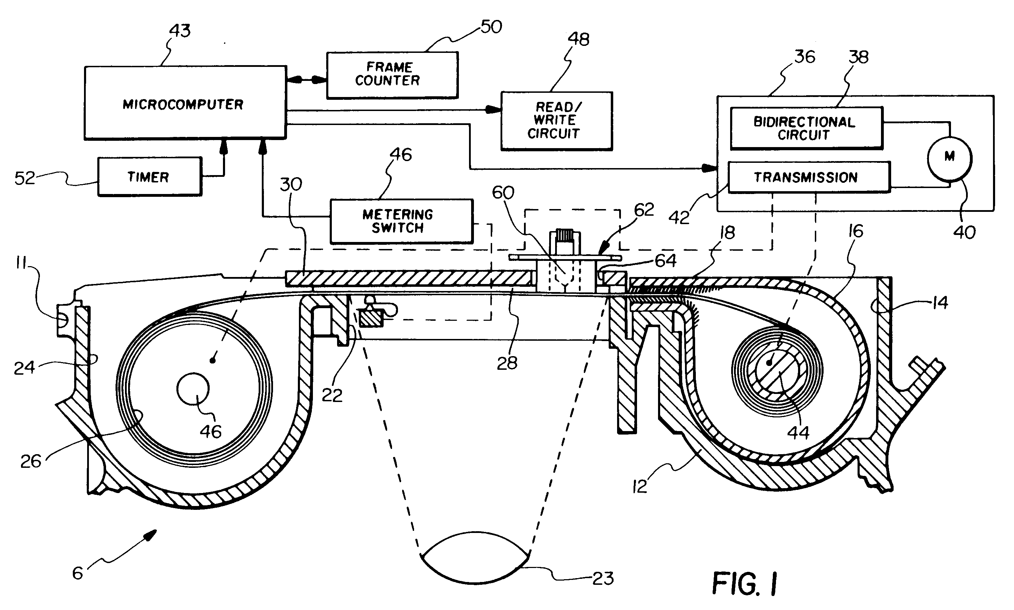

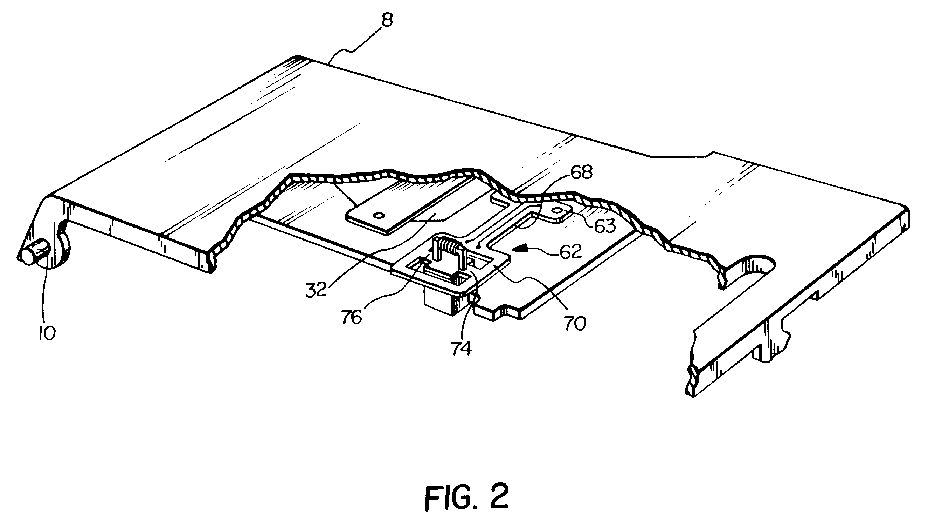

Referring to FIGS. 1, 2 and 3 of the drawings, there is shown a portion of a typical photographic still camera 6 having a back or rear door 8 (FIG. 2) pivotal to an open position by means of a pair of pins 10 one of which is shown in FIG. 2. The pins 10 are received in holes in frame 12. Since such cameras are well known in the art, features not necessary for an understanding of the present invention have been omitted or shown in block diagram to simplify the disclosure. Also, the invention will be described with reference to a single magnetic head. However, it is to be understood that a camera can be provided with a plurality of heads for multi-track recording.

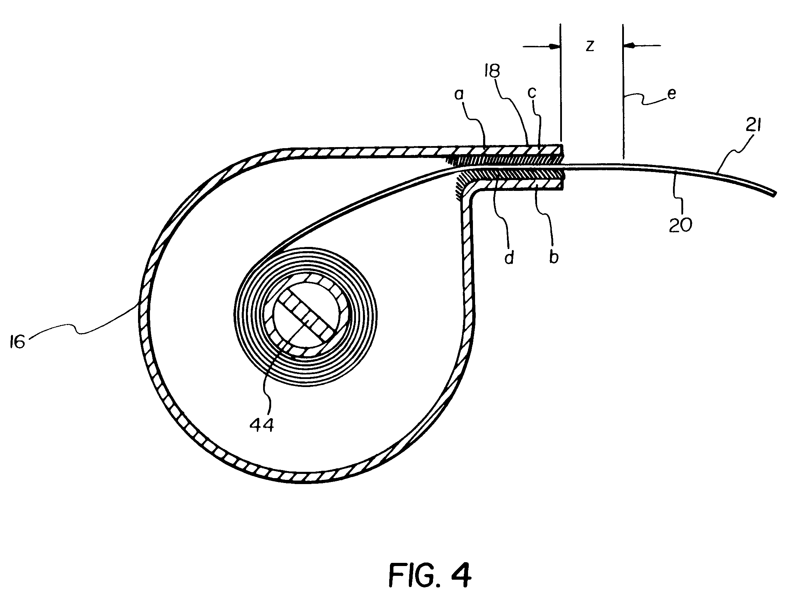

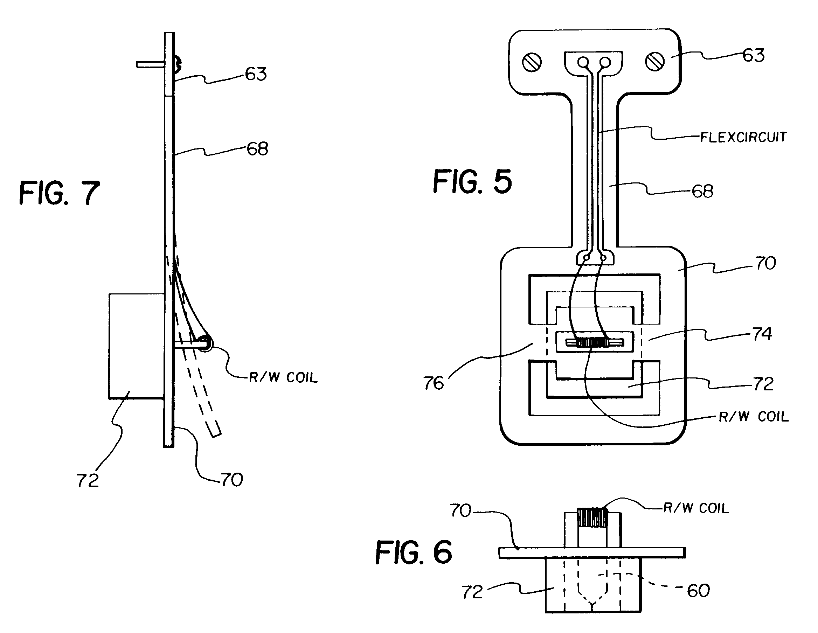

The camera 6 comprises a frame or housing 12 having a chamber 14 at one end thereof for receiving a film cartridge 16. The cartridge 16 which is shown more clearly in FIGS. 4 and 5, preferably takes the form of the film cartridge disclosed in US-A-4,855,773 having a lip 18 from which a film 20 is removed for exposure. The film 20 is provided with a virtually transparent magnetic coating 21 on its non-emulsion side, a single row of perforations (p) along one edge and dedicated longitudinal recording areas (r) along the edges outside the image area (i). As disclosed in WO-A-90/04214 the areas would be dedicated areas for recording information in the camera, the image area being dedicated to the recording of photofinishing information.

It will be apparent, however, that the recording apparatus disclosed herein is equally applicable to magnetic coatings or stripes on conventional 35mm film, and that the camera apparatus disclosed herein can alternatively be a conventional 35mm camera such as the commercially available KODAK K-14 Medalist VR 35 camera.

As shown in FIG. 4, the lip 18 comprises upper and lower spaced flanges (a) and (b) which serve to clamp upper and lower pieces of plush material (c) and (d) to opposite sides of the film to essentially provide a cantilever support to the film which results in diminishing residual stiffness of the film from the lip to the end (e) of zone Z shown in FIG. 4 as discussed in more detail below.

As is well known in the art, the surfaces of cartridge 16 and lip 18 engage complimental surfaces of the chamber 14 and the camera back whereby when the camera back is closed, the cartridge is fixedly held in the orientation shown in FIG. 1. Since such camera and cartridge interface features are well known in the art, further description is deemed unnecessary.

From the lip 18, the film 20 is transported across a rectangular exposure opening 22 aligned with a taking lens 23 to a film take-up chamber 24 where it is wound on a take-up spool 26. Mechanisms for accomplishing such film transport are well known in the art. Typically, they operate to advance the film frame by frame from the cartridge to the take-up spool, or if the camera exposes during rewind, frame by frame from the take-up spool to the cartridge.

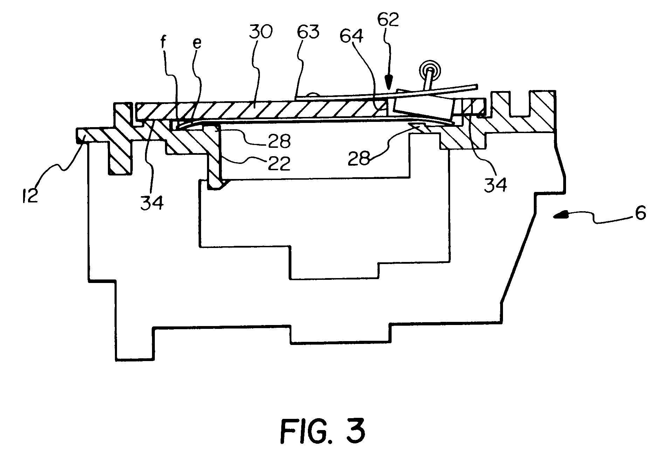

A pair of film rails 28 are formed on opposite sides of the rectangular exposure opening 22 to engage the longitudinal edges of the film. The film 20 is urged toward the rails 28 by a platen 30 mounted on a leaf spring 32 on the camera back 8. The platen 30 comprises a flat rectangular plate having planar dimensions complimental to the rectangular exposure opening 22 whereby upon closure of the back, platen 30 will engage platen support surfaces 34, engage the film 20 and urge it with slight pressure toward rails 28 under the influence of spring 32 as shown more clearly in FIG. 3. The platen 30 will tend to remove longitudinal curl resulting from film core set in the cartridge 16 and some of the transverse curl across the film. However, since the film is unsupported transversely on its emulsion side, some transverse curl still exists during film exposure as indicated in FIG. 3 at areas (e) but not enough to noticeably degrade the image.

In a typical still camera, the spacing between the platen 20 and the rails 28 is in the range of .25-.45 mm as a result of manufacturing tolerances. The photographic film used in such a camera is typically .15 mm thick. Accordingly, as shown in FIG. 3, the film may not actually engage the rails. Due to the transverse film curl, the extreme edges of the film may actually engage the camera surfaces (f) on the other side of the rails with the curl bias causing most of the width of the film to engage the platen. Because of this result, the camera lens is typically focused on a film plane next to the platen.

FIG. 1 also depicts in a block diagram some of the more basic central features of cameras of the type described. Typically, a motorized film transport means 36 comprising a conventional bi-directional circuit 38 for reversing a drive motor 40, a drive transmission 42 and drive hubs 44 and 46 which engage the core of film cartridge 16 and the take-up spool 26 respectively, is provided for rotating the spool core and the take-up spool either in the unwinding or winding directions under the control of a micro computer 43.

Other elements of the camera include a conventional metering switch 46, a read/write circuit 48, a shutter release mechanism, a conventional digital frame counter 50 and a conventional timer 52. These components are all controlled from the micro computer 43 in a manner well known in the art and since they form no part of the present invention, further description is deemed unnecessary.

As mentioned above, magnetic recording in photographic still cameras involves unique problems. Film advance occurs in a short period of time with a limited amount of motion and does not allow the steady conditions normally associated with magnetic recording to be achieved. In view of these problems, the read/write circuit 48 preferably utilizes the encoding and decoding techniques disclosed in, WO-A-89/12894, US-A-4,912,467 and US-A-4,876,697, and the code format preferably takes the form of that disclosed in the referenced copending application WO-A-89/12892.

In accordance with the invention, a conventional magnetic read/write head 60 connected to the read/write circuit 48 is mounted on an elongated flexure 62 having an end flange 63 attached at one end to the platen 30 by, for example, screws or cement. The head 60 and head support assembly extends through an opening 64 in platen 30 and is positioned so that when the camera back is closed as shown in FIG. 1, the head will engage the transparent magnetic coating of the film in the region adjacent the lip 18 of cartridge 16. The position of head 60 in the flexure 62 is adjusted so that when the camera back is closed the head will maintain slight contact i.e. within .254 µm (10 micro-inches) with the magnetic coating of film 20 with a bias force in the range of 14 - 56 grams.

Referring specifically to FIG. 5, the flexure comprises a flexure arm 68 extending from the flange 63 along an axis perpendicular to the longitudinal film axis. The arm 68 carries at its movable end an integral rectangular flexure frame 70 which is connected to a head support 72 by two inwardly extending transverse flexures 74 and 76.

The arm 68 functions as a torsion system to permit tilting or roll of the assembly comprising head 60 and support 72 transversely of the longitudinal film axis to accommodate variations in transverse film curl described above. The flexures 74 and 76 form a second independent torsion system to permit tilting or pitching of the head 60 in the longitudinal direction of the film to accommodate any disturbances in the longitudinal direction. The arm 68 will allow displacement of the head 60 in a vertical direction substantially perpendicular to the film as shown in FIG. 7. The flexure 62 thus allows freedom of movement of the head 60 and its support 72 on three axis (roll, pitch and elevation). The pitch axis is the axis of flexure arms 74 and 76 and the roll axis is the longitudinal axis of flexure arms 68 and 70. The elevation axis is the axis of head 60.

The flexure 62 is somewhat similar in configuration to the twin arm flexures employed in floppy disc recorders. However, to accommodate the more extreme disturbances encountered with photographic film, the single flexure arm 68 is provided with more flexibility for permitting greater accommodation to roll and elevational movement. Flexures 74 and 76 are also more flexible to retain the head in contact with the film during variations in longitudinal curl. Thus, the flexure has novel characteristics which enable it to accommodate the disturbances in a photographic film environment.

To calibrate the system, the vertical position or elevation of the head 60 is initially adjusted in support 72 to establish a high head contact force on the film. This force is then reduced through adjustment of the head elevation until it has insignificant effect on the film flatness and still provide good magnetic coupling. The other two degrees of freedom (pitch and roll) are relied on to maintain contact of the head with the film during film transport.

Because of the stiffness imparted to the film by the cartridge lip 18, the film will have diminishing residual stiffness to the end of zone Z shown on FIG. 4 which is the region where it is engaged by head 60. This, coupled with the straightness of the film accomplished by means of platen 30 and rails 28 eliminates the need for special supports on the side of the film opposite from the head. The flexural mounting of the head 60 will accommodate any remaining film curl variations and other disturbances to achieve reliable recording.

The disclosed embodiment of the invention achieves magnetic recording on conventional photographic film in a still camera by uniquely utilizing existing characteristics of the film and camera parts in combination with a flexure that accommodates tolerable film variations. Since the only additional mechanical parts that need be added to a conventional camera to achieve magnetic recording comprise a magnetic head and flexure, the system possesses significant advantages from a cost standpoint. Also, by mounting the head on the platen and avoiding use of a support on the other side of the film from the head, the size of the camera is not increased. Thus the invention has significant advantages.

Another significant advantage of the flexural mounting of the head is that the intimate contact necessary for proper magnetic coupling can be achieved with a very slight normal force applied to the film by the head. This allows the head to be physically located near the photographic image area without disturbing the position of the film or affecting image quality.

Another significant advantage of the flexural mounting of the recording head is that the inherent compliance permits the magnetic head to adjust to small transient disturbances and thus maintain the required head to film contact.

Still another significant advantage of the flexural head mounting is that it presents very low resistance to the film threading operation wherein the leading edge of the film must be pushed across the surface of the head. Because of the low contact force required (50 grams or less), the leading edge of the film acting on the curved surfaces of the head can readily lift the head so that it permits no obstruction in the film path.

While the invention has been shown and described with reference to a preferred embodiment thereof, it will be apparent that various changes may be made without departing from the scope of the invention as defined by the appended claims.

## Claims

1. A photographic still camera (6) including a camera body having a chamber (14) for receiving a film cartridge (16) containing film (20) and means (23) for exposing the film, the film having a magnetic recording area and the cartridge having a lip (18) for exiting film from the cartridge and cooperating with the chamber to orient the cartridge within the camera body, said camera being characterized by
a magnetic head (60) positioned in said body adjacent the lip of the cartridge, when said cartridge is inserted in said chamber, for recording information on the film; and
flexure means (62) for movably supporting said head (60) for movement in a direction normal to the film plane, roll movement in a direction transverse to the film plane and pitch movement in a direction longitudinal to the film plane.

2. A photographic still camera (6) as claimed in Claim 1 characterized by
an exposure opening (22) in the camera body;
parallel film rails (28) an opposite sides of said opening;
a platen (30) for urging the film toward said rails; and
said flexure means (62) supporting said head (60) on said platen for movement in predetermined directions relative to said film.

3. A photographic still camera (6) as claimed in Claim 2 characterized by
a rear door (8) having open and closed positions on said body; and
spring means (32) resiliently supporting said platen on said door, said spring means being adapted to urge said platen into engagement with said film when said door is closed.

4. A photographic still camera as claimed in Claim 3 wherein said flexure means permits said head to move in three directions relative to the film to compensate for disturbances in the film surface.

5. A photographic still camera (6) as claimed in Claim 4 wherein said flexure means (62) comprises an elongated arm (68) fixed at one end to said platen, a flexible frame (70) at the other end of said arm and a pair of flexure means (74, 76) extending inwardly of said frame, said head being supported on said pair of flexure means, said arm permitting roll and elevational movement of said head relative to the longitudinal axis of the film and said pair of flexure means permitting pitching movement of said head relative to the longitudinal axis of the film.

6. A photographic still camera (6) as claimed in claim 1 characterized by
means (18) defining a film path
a magnetic head (60) engaging the magnetic recording area of the film
at a zone (z) adjacent to the lip of the cartridge (16) where the film (20) has residual stiffness produced by a mechanical effect of the film interacting with the lip (18).

## Patentansprüche

1. Fotografische Stehbildkamera (6) mit einem Kameragehäuse, das eine Kammer (14) zur Aufnahme einer Film (20) enthaltenden Kassette (16) sowie eine Filmbelichtungseinrichtung (23) enthält, wobei der Film einen magnetischen Aufzeichnungsbereich aufweist und die Kassette eine Filmausfädellippe (18) besitzt, die im Zusammenwirken mit der Kammer (14) die Kassette in dem Kameragehäuse in der gewünschten Lage ausrichtet, **dadurch gekennzeichnet**, daß
ein Magnetkopf (60) zum Aufzeichnen von Informationen auf dem Film im Kameragehäuse benachbart der Filmausfädellippe der Kassette angeordnet ist, wenn sich die Kassette in der Kammer befindet, und
der Magnetkopf (60) auf einer flexiblen Einrichtung (62) für eine Hubbewegung in einer senkrecht zur Filmebene verlaufenden Richtung, eine Rollbewegung in einer quer zur Filmebene verlaufenden Richtung und eine Kippbewegung in einer längs zur Filmebene verlaufenden Richtung gelagert ist.

2. Kamera (6) nach Anspruch 1, dadurch gekennzeichnet, daß
in dem Kameragehäuse eine Belichtungsöffnung (22) vorgesehen ist,
auf gegenüberliegenden Seiten der Öffnung parallel verlaufende Filmführungsschienen (28) angeordnet sind,
eine Andrückplatte (30) den Film zu den Führungsschienen hin vorspannt und
die flexible Einrichtung (62) den Magnetkopf (60) auf der Andrückplatte für eine Bewegung in jeweils vorbestimmten Richtungen relativ zu dem Film lagert.

3. Kamera (6) nach Anspruch 2, dadurch gekennzeichnet, daß ein an dem Kameragehäuse vorgesehenes Kamerarückteil (8) in eine Offen- und eine Schließstellung bringbar ist und
die Andrückplatte an dem Kamerarückteil mittels einer Feder (32) elastisch gelagert ist, die die Andrückplatte so vorspannt, daß sie sich mit dem Film in Eingriff befindet, wenn das Kamerarückteil geschlossen ist.

4. Kamera (6) nach Anspruch 3, dadurch gekennzeichnet, daß die flexible Einrichtung eine Bewegung des Magnetkopfes in drei Richtungen relativ zu dem Film ermöglicht, um durch die Filmoberfläche erzeugte Störungen auszugleichen.

5. Kamera (6) nach Anspruch 4, dadurch gekennzeichnet, daß die flexible Einrichtung (62) einen langgestreckten, an seinem einen Ende an der Andrückplatte befestigten Arm (68), einen am anderen Ende des Armes angeordneten flexiblen Rahmen (70) sowie zwei flexible Elemente (74, 76) umfaßt, die sich von dem Rahmen aus nach innen erstrecken, wobei der Magnetkopf auf den beiden flexiblen Elementen gelagert ist, der Arm eine Roll- und Hubbewegung des Magnetkopfes relativ zur Längsachse des Films ermöglicht und die beiden flexiblen Elemente eine Kippbewegung des Magnetkopfes relativ zur Längsachse des Films zulassen.

6. Kamera (6) nach Anspruch 1, dadurch gekennzeichnet, daß Mittel (18) vorgesehen sind, die eine Filmbahn in einem der Filmausfädellippe der Kassette (16) benachbarten Bereich (z) bilden, in dem der Film (20) eine Reststeifigkeit besitzt, die durch eine mechanische Wirkung des mit der Filmausfädellippe (18) zusammenwirkenden Films entsteht.

## Revendications

1. Appareil photographique (6) comportant un corps d'appareil photographique ayant une chambre (14) pour recevoir une cartouche (16) de film contenant un film (20) et des moyens (23) pour exposer le film, le film ayant une zone d'enregistrement magnétique et la cartouche ayant une lèvre (18) pour la sortie du film de la cartouche et coopérant avec la chambre pour orienter la cartouche à l'intérieur du corps de l'appareil photographique, ledit appareil photographique étant caractérisé par
une tête magnétique (60) positionnée dans ledit corps dans une position adjacente à la lèvre de la cartouche, lorsque ladite cartouche est insérée dans ladite chambre, pour enregistrer l'information sur le film; et
des moyens de flexion (62) pour supporter de manière mobile ladite tête (60) pour un déplacement dans une direction normale au plan du film, un mouvement de roulis dans une direction transversale au plan du film et un mouvement d'inclinaison longitudinale dans une direction longitudinale au plan du film.

2. Appareil photographique (6) selon la revendication 1 caractérisé par
une ouverture d'exposition (22) dans le corps de l'appareil photographique;
des rails (28) parallèles pour le film sur les côtés opposés de ladite ouverture;
un plateau (30) pour pousser le film vers lesdits rails; et
lesdits moyens de flexion (62) supportant ladite tête (60) sur ledit plateau pour se déplacer dans des directions prédéterminées par rapport audit film.

3. Appareil photographique (6) selon la revendication 2 caractérisé par
un couvercle arrière (8) ayant des positions ouverte et fermée sur ledit corps; et
des moyens à ressort (32) supportant de manière élastique ledit plateau sur ledit couvercle, lesdits moyens à ressort étant adaptés pour pousser ledit plateau en engagement avec ledit film lorsque ledit couvercle est fermé.

4. Appareil photographique selon la revendication 3 dans lequel lesdits moyens de flexion permettent à ladite tête de se déplacer dans trois directions par rapport au film pour compenser les perturbations à la surface du film.

5. Appareil photographique (6) selon la revendication 4 dans lequel lesdits moyens de flexion (62) comportent un bras (68) de forme allongée fixé à une extrémité dudit plateau, un châssis flexible (70) à l'autre extrémité dudit bras et une paire de moyens de flexion (74, 76) s'étendant vers l'intérieur dudit châssis, ladite tête étant supportée sur ladite paire de moyens de flexion, ledit bras permettant le déplacement de roulis et d'élévation de ladite tête par rapport à l'axe longitudinal du film et ladite paire de moyens de flexion permettant le mouvement d'inclinaison longitudinale de ladite tête par rapport à l'axe longitudinal du film.

6. Appareil photographique (6) selon la revendication 1 caractérisé par
des moyens (18) définissant un trajet du film
une tête magnétique (60) coopérant avec la zone d'enregistrement magnétique du film en une zone (z) adjacente à la lèvre de la cartouche (16) où le film (20) a une rigidité résiduelle produite par un effet mécanique du film interagissant avec la lèvre (18).
